# FASCICULE DE BREVET EUROPEEN

(11) **EP 1 152 258 B1**
(45) Date de publication et mention de la délivrance du brevet: **12.09.2007**
(21) Numéro de dépôt: 01400949.2
(22) Date de dépôt: 12.04.2001
(51) Int. Cl.: G01S 13/89, G01S 7/35, G01S 7/03, H01Q 21/06, H01Q 21/00, H01Q 3/26

(54) **Radar bas coût, notamment à imagerie à haute résolution**
Kostengünstiges Radar, insbesondere für hochauflösende Bilderzeugung
Low-cost radar, in particular for high-resolution imaging

(30) Priorité: 18.04.2000 FR 0004983
(43) Date de publication de la demande: 07.11.2001
(73) Titulaire: Thales, 75008 Paris (FR)
(72) Inventeur: Cornic, Pascal, 94117 Arcueil Cedex (FR); Laviec, Philippe, 94117 Arcueil Cedex (FR); Lo-Hine Tong, Dominique, 94117 Arcueil Cedex (FR)
(74) Mandataire: Lucas, Laurent Jacques

(56) Documents cités:
- EP-A- 0 919 828
- US-A- 5 351 053
- US-A- 5 815 112
- US-A- 5 959 570

## Description

La présente invention concerne un radar à bas coût, notamment à imagerie à haute résolution. Elle s'applique en particulier pour des radars de surveillance à courte distance telle que par exemple la surveillance de passage à niveau de carrefours ou de parking.

Il existe encore sur le réseau routier de nombreux passages à niveau, manuels ou automatiques. On dénombre malheureusement des accidents qui se produisent régulièrement. Pour diminuer le risque d'accidents, il peut être intéressant de disposer de moyens de surveillance des passages à niveau, ces moyens transmettant par ailleurs aux trains à l'approche l'état de circulation aux abord des passages à niveau. Ces moyens de surveillance doivent notamment être opérationnels par tous temps, de nuit comme de jour. Un radar à imagerie répond à ces contraintes.

Il existe plusieurs types de radars à imagerie, en particulier ces radars peuvent être du type :
- radars à balayage mécanique ;
- radars à balayage électronique ;
- radars à formation de faisceaux par le calcul (FFC).

Les radars à balayage mécanique ne permettent pas d'obtenir une vision instantanée de la scène observée. Ils sont par ailleurs coûteux en raison de la présence des éléments mécaniques nécessaires pour mouvoir l'antenne. Enfin, ils sont moyennement fiables à cause notamment de l'usure de ces éléments mécaniques.

Les radars à balayage électronique permettent quant à eux d'obtenir une vision quasi simultanée de la scène observée. Cependant, ils mettent en oeuvre des circuits électroniques complexes et nécessitent des contraintes de fabrication très fortes, liées au contrôle de la phase et de l'amplitude sur chaque élément rayonnant de l'antenne, ce qui les rend coûteux et limite leur domaine d'application.

Les radars à formation de faisceaux par le calcul permettent d'obtenir une vision instantanée de la scène observée. Le contrôle de la phase et de l'amplitude sur chaque élément de l'antenne de réception est effectuée directement par l'algorithme de formation de faisceau par le calcul et les dispersions de l'antenne et des voies analogiques de réception peuvent être compensées par ce traitement. Cependant, ces radars utilisent une réception hétérodyne. De ce fait, chaque élément de l'antenne de réception est suivi d'une chaîne de réception complexe comportant notamment des moyens de mélange, d'amplification, de filtrage et de codage. Le coût de ce type de radar est donc élevé.

Une demande de brevet EP-A-0 919 828 divulgue un système radar comportant des moyens de formations d'un faisceau d'émission associé à un pluralité d'éléments d'antennes.

Un but de l'invention est de permettre la réalisation d'un radar à imagerie économique du type à formation de faisceaux par le calcul.

A cet effet, l'invention a pour objet un radar qui comporte des moyens de formation de faisceaux par le calcul associés à N voies de réception homodyne, chaque voie fournissant un signal de réception aux moyens de formation de faisceaux par le calcul, l'antenne d'émission étant disposée de telle sorte que sa distance augmente d'une antenne de réception à la suivante. L'espacement entre les antennes est défini de façon à orienter la fuite homodyne dans une direction située dans une zone angulaire de l'espace qui n'est pas traitée par le radar.

La distance de l'antenne d'émission augmente par exemple régulièrement d'une antenne de réception à la suivante. En particulier, les antennes des voies de réception sont par exemple alignées avec un espace d sensiblement constant entre deux antennes consécutives.

Avantageusement, le radar exploite la fuite homodyne pour réaliser un auto-test de la fonction d'émission-réception.

Dans un mode de réalisation, les antennes de réception sont par exemple réalisées sur un même circuit imprimé.

L'invention a notamment pour principaux avantages qu'elle permet une haute résolution sur une large bande de fréquence, qu'elle s'adapte à de nombreuses applications, qu'elle permet une très bonne reproductibilité de fabrication, qu'elle permet une grande sécurité de fonctionnement, et qu'elle permet un fonctionnement modulaire du radar.

D'autres caractéristiques et avantages de l'invention apparaîtront à l'aide de la description qui suit faite en regard de dessins annexés qui représentent :
- la figure 1, par un synoptique, un exemple de réalisation possible d'un radar selon l'invention ;
- la figure 2, une illustration des faisceaux élémentaires d'antennes d'un radar selon l'invention ;
- la figure 3, une illustration de la disposition des antennes élémentaires de réception dans un radar selon l'invention ;
- la figure 4, un exemple de réalisation, en circuit imprimé, des voies de réception d'un radar selon l'invention ;
- la figure 5, une vue détaillée d'une voie de réception dans le mode de réalisation précédent ;
- la figure 6, une illustration de l'aspect modulaire d'un radar selon l'invention ;
- la figure 7, un exemple d'utilisation d'un radar selon l'invention pour déterminer la quantité de matériau dans une cuve.

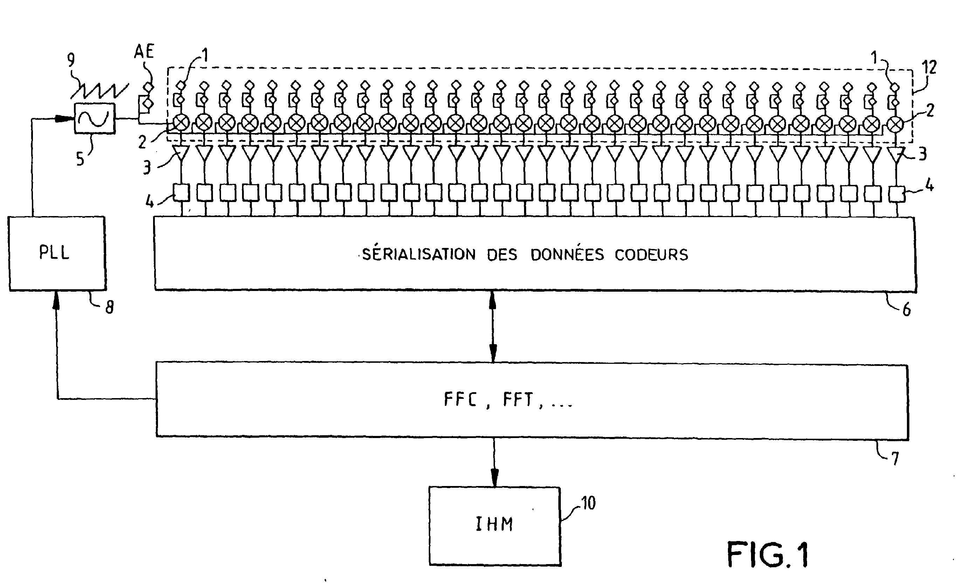

La figure 1 présente par un synoptique un mode de réalisation possible d'un radar selon l'invention, ayant par exemple une fonction d'imagerie. Il s'agit d'un radar à formation de faisceau par le calcul ayant une réception homodyne. La chaîne de réception se résume alors à une démodulation du signal reçu par chaque antenne élémentaire par l'oscillateur local d'émission, du filtrage, de l'amplification et du codage. La réception se faisant en bande de base, il est alors possible d'utiliser des composants de très grande diffusion et de faible coût pour la chaîne de réception. Une telle réception peut néanmoins présenter un inconvénient dissuasif pour une utilisation de surveillance par imagerie radar, il s'agit de la dégradation de la sensibilité du radar due aux fuites homodynes. Cette perte de sensibilité est notamment présente à courte distance, ce qui correspond au cas d'utilisation du radar pour une surveillance de proximité telle que par exemple une surveillance de passage à niveau ou de carrefour. Comme le montrera la description qui suit, l'invention surmonte l'inconvénient précité en réalisant avantageusement une compression des fuites homodynes dans une direction donnée, donc contrôlable.

Ainsi donc un radar selon l'invention tel que représenté par la figure 1 comporte plusieurs voies de réception en parallèle pour une formation de faisceau par le calcul. Par la suite, à titre d'exemple, on considérera que le radar comporte 32 voies de réception. Une voie de réception comporte une antenne élémentaire de réception 1, un mélangeur hyperfréquence 2, un amplificateur 3 et un convertisseur analogique-numérique 4. Plus particulièrement, une antenne élémentaire 1 est reliée à une première entrée d'un mélangeur 2. La deuxième entrée de celui-ci reçoit le signal produit par l'oscillateur local d'émission 5. Etant donné que le radar est du type homodyne, il n'y a pas de transposition de fréquence à une fréquence intermédiaire. La sortie du mélangeur, comportant ainsi le signal de réception démodulé par le signal d'oscillateur local, est reliée à l'entrée d'un amplificateur 3 dont la sortie est reliée à l'entrée d'un convertisseur 4. Ce dernier convertit le signal analogique de réception en un signal numérique destiné notamment à être traité par les moyens de calcul pour la formation de faisceau par le calcul, appelée FFC par la suite. Les 32 signaux numériques issus des 32 voies de réception sont par exemple traités par des moyens 6 de sérialisation des données. En d'autres termes, les 32 signaux parallèles sont par exemple mis en série pour être transmis aux moyens 7 de formation de faisceaux par le calcul, FFC. Ces moyens sont réalisés de façon connue à base de processeurs de traitement du signal. Ces moyens sont par ailleurs associés, par exemple sur les mêmes circuits matériels aux moyens de calcul de transformée de Fourier rapide, FFT, ainsi qu'à d'autres moyens de traitement radar connus par ailleurs. Ces derniers fournissent par exemple par ailleurs la commande numérique de forme d'onde radar transmise à l'oscillateur local 5 par l'intermédiaire d'une boucle à verrouillage de phase 8, appelée encore PLL selon les initiales de l'expression anglo-saxonne « Phase Loop Lock ». La forme d'onde produite 9 est par exemple celle d'un radar FMCW, c'est-à-dire une forme d'onde continue dont la fréquence est modulée linéairement par des rampes montantes ou descendantes. D'autres formes d'ondes sont possibles, par exemple du type à saut de fréquence. Les moyens de traitement radar 7 sont par exemple reliés à une interface homme machine 10, destinée notamment à exploiter l'image radar.

A l'émission, la sortie de l'oscillateur local est reliée à une antenne d'émission 11. Cet oscillateur local présente en sortie un signal suffisamment puissant pour l'émission, mais aussi pour alimenter les 32 mélangeurs 2. Avantageusement, l'antenne d'émission est mise à l'écart des antennes de réception pour ne pas perturber la réception.

Chaque antenne 1, 11 de réception et d'émission, est par exemple constituée de deux pastilles, encore appelées patches dans la littérature anglo-saxonne. Les antennes de réception 1 sont par exemple réalisées sur un même circuit imprimé 12. De préférence, les circuits mélangeurs 2 sont eux aussi réalisés sur ce même circuit imprimé. Moyennant quelques précautions, l'antenne d'émission peut elle aussi être réalisée sur ce circuit imprimé.

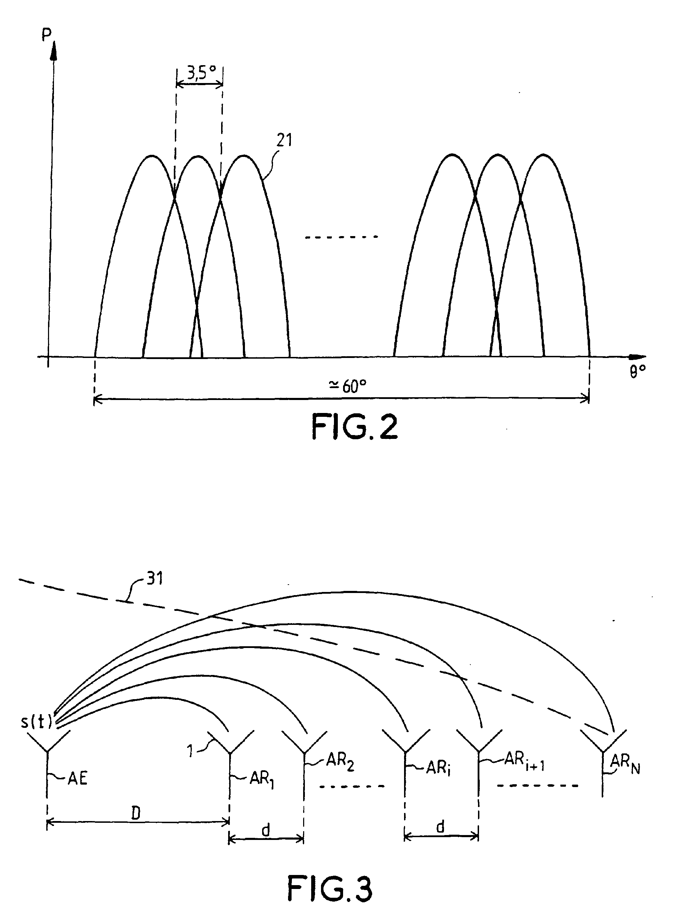

La figure 2 illustre la résolution obtenue par FFC ainsi que le domaine angulaire de réception, dans le cas d'utilisation de 32 voies de réception. La FFC permet le calcul de 32 faisceaux élémentaires 21 qui se chevauchent. La largeur angulaire occupée par ces 32 faisceaux élémentaires est par exemple de l'ordre de 60°, correspondant à l'angle d'action du radar. La résolution correspond à la largeur d'un faisceau élémentaire diminuée de ses zones de chevauchement, ce qui correspond par exemple à un angle de l'ordre 3,5°, caractérisant la résolution du radar. Un radar à FFC permet donc d'obtenir une haute résolution, sur un large domaine angulaire pourvu que l'on prévoie suffisamment de voies de réception.

La technique de réception homodyne est par ailleurs économique, puisqu'elle évite une certaine complexité de circuits et permet d'utiliser des composants de grande diffusion et donc de faible coût pour la chaîne de réception. Les coûts sont encore diminués en réalisant une partie des circuits de réception, notamment les antennes élémentaires 1 et les circuits mélangeurs 2 par la technique du circuit imprimé. Les zones conductrices constituant les antennes 1, les mélangeurs 2 et les lignes hyperfréquence peuvent en effet être obtenus par usinage chimique sur un support organique selon la technique classique du circuit imprimé qui est bien éprouvée et peu coûteuse. Outre l'aspect économique, il en résulte par ailleurs une très bonne reproductibilité des pièces et une grande fiabilité de fonctionnement. Enfin, la réduction des coûts peut aussi être poursuivie en imprimant tous les éléments, c'est-à-dire les antennes, les mélangeurs et les lignes hyperfréquence, sur une même face du support. Cela évite par ailleurs la réalisation d'un grand nombre de traversées destinées aux signaux hyperfréquence sur le circuit imprimé. Ces traversées sont ainsi réduites au seul passage du signal fourni par l'oscillateur local 5 et éventuellement aux signaux d'émission si l'antenne d'émission est aussi présente sur le circuit imprimé.

L'invention permet donc d'obtenir un radar à imagerie haute résolution économique. Avantageusement, l'invention permet de maîtriser les fuites homodynes, perturbatrices de réception.

La figure 3 illustre une disposition des antennes de réception qui permet de rejeter ces fuites dans une direction donnée, et donc d'en assurer le contrôle. Les antennes de réception, notées AR₁, AR₂, ...ARᵢ, ARᵢ₊₁, ...AR_{N}, sont alignées régulièrement, c'est-à-dire avec un espace d sensiblement constant entre deux antennes consécutives d'antennes. L'antenne d'émission AE est par exemple alignée avec les antennes de réception sans y être mélangée. Elle est au moins disposée de telle sorte que sa distance augmente régulièrement d'une antenne de réception à l'autre, c'est-à-dire que sa distance augmente par exemple selon un pas constant. Dans l'exemple de la figure 3, l'antenne de réception est à une distance D quelconque d'une première antenne AR₁, puis à une distance D+d d'une deuxième antenne AR₂, puis à une distance D+2d d'une troisième antenne de réception et ainsi de suite.

L'antenne d'émission AE rayonne un signal hyperfréquence s(t) accompagné d'un bruit à bande limitée représentant la fuite homodyne, vers les antennes de réception par couplage. Le couplage se produit dans l'air mais aussi entre les lignes hyperfréquence d'émission et de réception. La réception étant du type homodyne et non hétérodyne, il n'y a pas de transposition de fréquence permettant de s'affranchir de ce bruit rayonné.

La fuite homodyne s(t) rayonnée par l'antenne se retrouve donc au niveau de la première antenne avec un retard T = 2D/c dû à la distance D, c étant la vitesse de la lumière. La première antenne de réception AR₁ reçoit donc la fuite s(t-T). Entre la deuxième antenne de réception AR₂ et la première antenne AR₁, s'ajoute un retard τ = 2d/c. Ce même retard s'ajoute par la suite d'une antenne à sa suivante. Ainsi, à un instant t, la fuite rayonnée vers chaque antenne est définie comme suit :
- Antenne AR₁ s(t - T)
- Antenne AR₂ s(t - T - τ)
- Antenne ARᵢ s(t - T - 2τ)
- Antenne ARᵢ₊₁ s(t - T - iτ)
- Antenne AR_{N} s(t - T - (N-1)τ)

La fuite homodyne captée est donc la même pour toutes les antennes, au retard τ près, qui est constant d'une antenne à la suivante. Il en résulte que la fuite homodyne est captée par les antennes selon une direction apparente 31 qui est parfaitement définie en fonction des retards τ. On peut donc choisir l'espacement entre les antennes de façon à orienter la fuite homodyne dans une direction apparente donnée. Cette direction apparente dépend de la direction réelle d'arrivée de la fuite et du diagramme d'ambiguïté du réseau. Par exemple, pour une antenne dont la source d'émission et les sources ou antennes de réception sont alignées, la direction d'arrivée de la fuite est proche de 90°. Cette fuite n'est pas vue directement. Elle est vue à travers le diagramme d'ambiguïté du réseau dans une direction définie par un angle θ vérifiant sinθ = (λ/d - 1). Ainsi par exemple, pour d=0,7λ, il vient θ = 25°. L'espacement entre les antennes de réception peut être choisi de façon à orienter la fuite homodyne dans une direction choisie.

Le bruit qui accompagne la fuite est généralement à bande étroite et subit par conséquent le même traitement, ce qui revient à le concentrer dans une direction particulière qui, de préférence, ne sera pas exploitée par le radar en mode opérationnel. Il peut par contre être exploité pour réaliser un auto-test de la fonction émission-réception, sans adjonction de circuits complémentaires, les adaptations étant uniquement logicielles. Un radar selon l'invention peut donc, économiquement et simplement, exploiter la fuite pour réaliser un auto-test des fonctions d'émission et de réception.

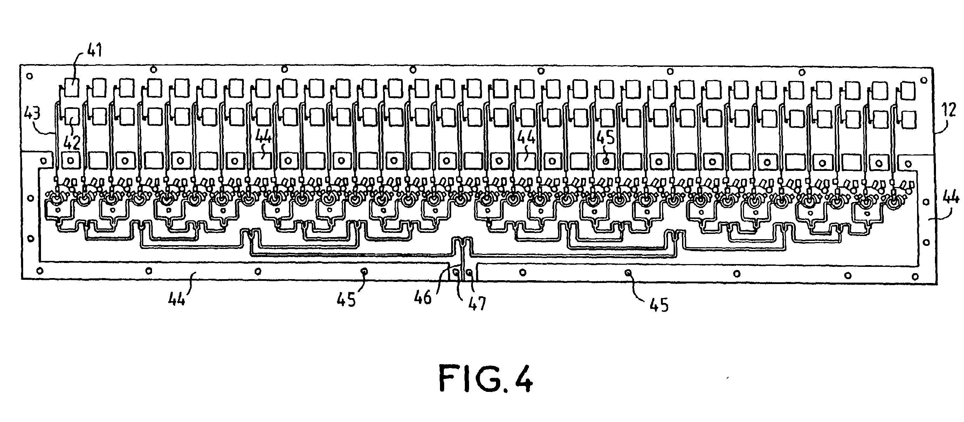

La figure 4 illustre un mode de réalisation possible des antennes de réception et des mélangeurs. Ce mode de réalisation comporte toujours à titre d'exemple 32 voies. Les antennes et les lignes hyperfréquence sont imprimées sur un support 12, par exemple organique du type époxy. De préférence, tous ces éléments sont imprimés sur la même face du support, l'autre face étant recouverte d'un plan de masse. Les antennes sont alignées selon une distance sensiblement constante d'une antenne à la suivante. Chaque antenne de réception élémentaire comporte par exemple deux pastilles 41, 42 reliées en parallèle à une ligne hyperfréquence 43. Cette dernière relie les antennes à son circuit mélangeur 2. Avantageusement, un écran électromagnétique protège ces derniers des rayonnements extérieurs. A cet effet une bande métallique 44 entoure les circuits mélangeurs. Cette bande métallique est coupée aux endroits où passent les lignes de liaison hyperfréquence 43 vers les antennes. Un capot métallique non représenté vient ensuite recouvrir les mélangeurs, les bords du capot étant placés au contact de la bande métallique 44. Des trous 45, taraudés ou non, sont par exemple prévus pour permettre la fixation du capot sur le support 12. L'espace intérieur entre le capot et le circuit imprimé est par exemple rempli par de la mousse absorbante pour éviter notamment un couplage électromagnétique entre les différentes lignes hyperfréquence.

Le signal d'oscillateur local est fourni aux mélangeurs par une ligne hyperfréquence imprimée 46, laquelle se subdivise en branches successives, chaque branche se divisant par exemple en deux, de sorte que la longueur de ligne hyperfréquence entre l'oscillateur local et un mélangeur soit la même pour tous les mélangeurs, dans le but notamment que les signaux de démodulation présents sur les mélangeurs soient tous synchrones. Un trou 47 permet par exemple de faire passer un câble transportant le signal hyperfréquence produit par l'oscillateur local, l'âme du câble étant par exemple soudée sur la ligne hyperfréquence 46 imprimée sur le support 12.

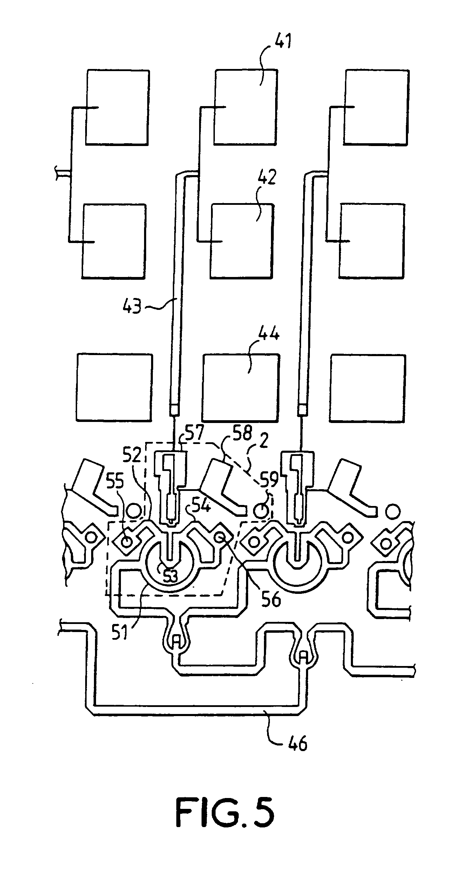

La figure 5 illustre par une vue agrandie un mode de réalisation des mélangeurs 2, dont une entrée reçoit le signal capté par l'antenne élémentaire associée et l'autre entrée reçoit le signal de démodulation fourni par l'oscillateur local 5. La sortie du mélangeur attaque l'entrée de l'amplificateur 3 de la voie de réception.

Une antenne élémentaire d'une voie de réception comporte par exemple deux pastilles 41, 42. Le signal capté par cette antenne élémentaire transite par une liaison hyperfréquence 43 vers le mélangeur 2. Le mélangeur utilisé est par exemple un mélangeur équilibré qui comporte deux diodes, non représentées, montées en tête bêche en sortie d'un anneau hybride large bande 0/180° 51. Trois lignes quart d'onde 52, 53, 54 servent par exemple de retour de masse aux diodes. La longueur d'onde considérée est la longueur d'onde à la fréquence centrale. Une première ligne quart d'onde 52 sépare un premier point de masse, représenté par un trou métallisé 55, de la cathode de la première diode. Une deuxième ligne quart d'onde 53 sépare l'anode de la première diode de la cathode de la deuxième diode. Une troisième ligne quart d'onde sépare la cathode de la deuxième diode d'un point de masse, représenté par un trou métallisé 56. Les deux diodes sont connectées par ailleurs sur la ligne 43 reliant les pastilles 41, 42 au mélangeur et véhiculant le signal détecté. Des éléments de filtrage 57, 58 isolent le signal détecté du signal de sortie du mélangeur. La sortie du mélangeur est matérialisée par un point de connexion 59 relié à l'entrée du mélangeur 3.

Le circuit imprimé 12 sur lequel sont réalisées les antennes élémentaires 1 et les lignes hyperfréquence peut être fixé sur une face d'une platine. Sur l'autre face de la platine peuvent être disposés notamment les amplificateurs (3), les convertisseurs analogique-numérique 4, les moyens de mise en série 6, les moyens de traitement radar 7, la boucle à verrouillage de phase 8 ainsi que l'oscillateur local 5. Ces moyens sont supportés par des circuits imprimés qui sont par exemple eux-mêmes fixés sur la platine. La platine équipée des ces différents circuits peut être protégée par une enveloppe munie d'une fenêtre hyperfréquence en regard des antennes AE, 1. A titre d'exemple, le radar ainsi obtenu peut présenter une hauteur de l'ordre de 20 cm, une profondeur de 10 cm et une largeur de 80 cm, pour un poids d'environ 8 kg.

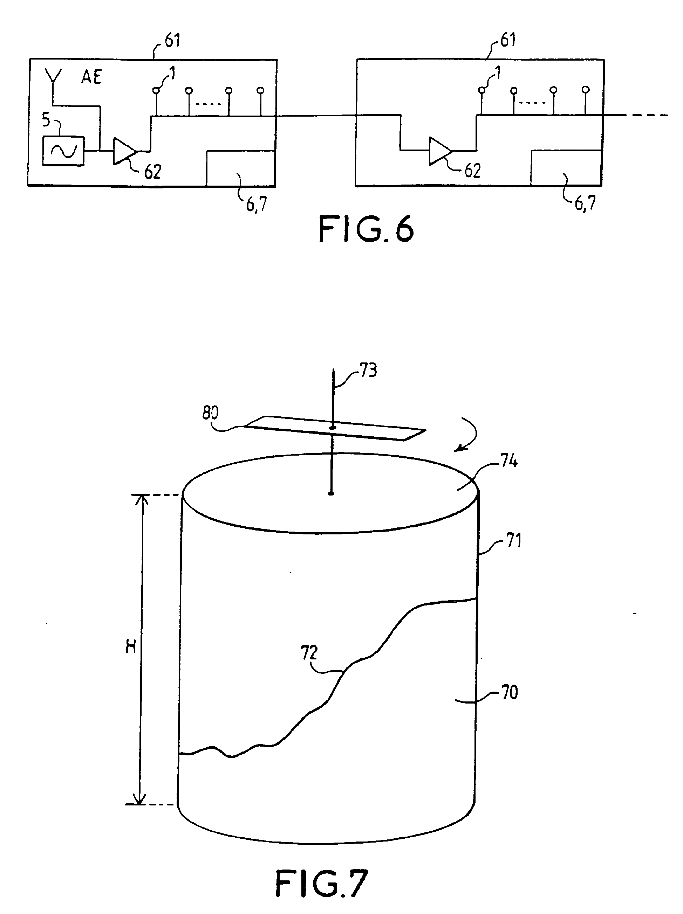

La figure 6 illustre, par un synoptique, un autre avantage d'un radar selon l'invention. Il s'agit de sa modularité. Plusieurs radars selon l'invention peuvent en effet être câblés en parallèle dans le but d'obtenir un radar de plus grande résolution ou de plus grand domaine angulaire d'action. Un radar tel que décrit selon les figures précédentes représente donc un module 61. Un premier module joue le rôle de module pilote. En particulier son oscillateur local 5 commande aussi tous les autres modules. A cet effet, chaque module comporte en entrée un amplificateur 62 pour permettre au signal produit par l'oscillateur du premier module de commander tous les autres modules. Le radar constitué de tous les modules ne comporte par ailleurs qu'une antenne d'émission AE active, qui est par exemple celle du premier module, cette antenne étant alimentée par l'oscillateur local de ce premier module. Les antennes d'émission et les oscillateurs locaux des autres modules peuvent donc rester inactifs. Pour des raisons d'efficacité industrielle, tous les modules sont par exemples identiques. Ainsi, la sortie du circuit d'amplification 62 du signal d'oscillateur local qui alimente les circuits de réception du premier module, attaque par ailleurs l'entrée du circuit d'amplification 62 du deuxième module et ainsi de suite. Les circuits de traitement radar 6, 7, notamment les circuits de FFC fonctionnent en parallèle. Le domaine angulaire de surveillance ou la résolution angulaire peuvent ainsi être augmentés par le nombre accru d'antennes et de voies de réceptions en parallèle.

Il est à noter qu'un radar selon l'invention permet une vision instantanée de la scène observée. Par ailleurs, il est en particulier aisé de former des diagrammes d'antenne très différents avec le même matériel. Un radar selon l'invention est donc adaptable à de nombreuses situations. Il n'est pas nécessaire de réaliser un autofocus, c'est-à-dire un réglage de phases entre les différentes voies de réception, un simple réglage de gain suffit. Enfin, le radar possède une capacité large bande avec une haute résolution.

Un radar selon l'invention peut être utilisé pour de nombreuses applications. Il peut être utilisé notamment pour des applications de surveillance, telles que par exemple de la gestion de trafic, la surveillance de carrefours, la surveillance de parkings, la surveillance de passages à niveau, la surveillance de voies de péages et plus généralement pour tous types de surveillance et de protection de zones.

Un radar selon l'invention peut aussi être utilisé pour une détection d'obstacle avec une grande précision. Un radar selon l'invention peut ainsi équiper un robot mais aussi un véhicule de secours évoluant dans de la fumée. L'aspect modulaire du radar permet notamment son adaptation à plusieurs types d'application en fonction de l'angle de surveillance nécessaire.

La figure 7 illustre une autre application possible d'un radar selon l'invention. Il peut notamment s'appliquer avantageusement pour déterminer la quantité de matériau 70 contenu dans une cuve 71 lorsque ce matériau n'est pas liquide et que sa surface supérieure 72 n'est pas plane. Le radar 80 comporte un arbre 73 autour duquel il tourne, les antennes étant en regard du matériau 70. Si la cuve est circulaire, l'arbre est par exemple confondu avec l'axe de symétrie de la cuve. Un mouvement de rotation est appliqué au radar 80 par l'intermédiaire de l'arbre. Le radar selon l'invention peut ainsi réaliser une cartographie en trois dimensions du contenu de la cuve. Il peut donc déterminer la quantité de matériau 70, en connaissant la hauteur totale H de la cuve et la distance de chaque point de la surface 72 à une altitude de référence relative 74, cette dernière étant par exemple le dessus de la cuve.

Les exemples d'applications cités précédemment ne sont bien sûr pas limitatifs.

## Revendications

1. Radar, comportant des moyens de formation de faisceaux par le calcul (7) associés à N voies de réception homodyne, chaque voie fournissant un signal de réception aux moyens de formation de faisceaux par le calcul, l'antenne d'émission (AE) étant disposée de telle sorte que sa distance augmente d'une antenne de réception (1) à la suivante, **caractérisé en ce que** l'espacement entre les antennes étant défini de façon à orienter la fuite homodyne dans une direction située dans une zone angulaire de l'espace qui n'est pas traitée par le radar, la distance de l'antenne d'émission (AE) augmente régulièrement d'une antenne de réception (1) à la suivante.

2. Radar selon la revendication 1, **caractérisé en ce que** les antennes des voies de réception (1) sont alignées avec un espace d sensiblement constant entre deux antennes consécutives.

3. Radar selon l'une quelconque des revendications précédentes, **caractérisé en ce que** l'antenne d'émission (AE) est alignée avec les antennes de réception (1).

4. Radar selon l'une quelconque des revendications précédentes, **caractérisé en ce qu'**il exploite la fuite homodyne pour réaliser un auto-test de la fonction d'émission-réception.

5. Radar selon l'une quelconque des revendications précédentes, **caractérisé en ce qu'**une voie de réception comporte une antenne (1), un mélangeur hyperfréquence (2), un amplificateur (3) et un convertisseur analogique-numérique (4), une antenne (1) est reliée à une première entrée du mélangeur (2), la deuxième entrée de celui-ci recevant le signal produit par un oscillateur local d'émission (5), la sortie du mélangeur étant reliée à l'entrée de l'amplificateur (3) dont la sortie est reliée à l'entrée du convertisseur (4), ce dernier convertissant le signal analogique de réception en un signal numérique destiné à être traité par les moyens de formation de faisceaux par le calcul.

6. Radar selon la revendication 5, **caractérisé en ce que** les antennes de réception (1) sont du type pastille réalisées sur un même circuit imprimé (12).

7. Radar selon la revendication 6, **caractérisé en ce que** les mélangeurs (2) sont réalisés sur ce même circuit imprimé.

8. Radar selon l'une quelconque des revendications 5 ou 6, **caractérisé en ce qu'**une bande métallique (44) entoure les mélangeurs, cette bande étant coupée aux endroits où passent les liaisons hyperfréquence vers les antennes, un capot métallique recouvrant les mélangeurs ayant ses bords au contact de la bande métallique.

9. Radar selon l'une quelconque des revendications précédentes, **caractérisé en ce que** sa forme d'onde est du type FMCW, forme d'onde continue dont la fréquence est modulée par des rampes.

10. Radar selon l'une quelconque des revendications 1 à 8, **caractérisé en ce que** sa forme d'onde est du type à saut de fréquence.

11. Radar selon l'une quelconque des revendications précédentes, **caractérisé en ce qu'**il comporte un oscillateur local (5) alimentant l'antenne d'émission (AE) et les voies de réception.

12. Radar selon la revendication 12, **caractérisé en ce que** la longueur de ligne hyperfréquence entre l'oscillateur local (5) et un mélangeur (2) est la même pour tous les mélangeurs.

13. Radar selon l'une quelconque des revendications 5 à 12, **caractérisé en ce que** le circuit imprimé (12) étant fixé sur une face d'une platine, l'autre face de cette platine supporte les moyens de traitement radar.

14. Radar modulaire, **caractérisé en ce qu'**un module (61) est un radar selon l'une quelconque des revendications précédentes, les circuits de formation de faisceaux par le calcul fonctionnant en parallèle.

15. Radar selon la revendication 14, **caractérisé en ce qu'**un premier module joue le rôle de module pilote, son oscillateur local (5) commandant tous les autres modules, chaque module comportant en entrée un amplificateur (62) pour amplifier le signal de l'oscillateur local (5).

16. Radar selon l'une quelconque des revendications 14 ou 15, **caractérisé en ce que** la sortie du circuit d'amplification (62) du signal d'oscillateur local qui alimente les circuits de réception du module pilote, attaque par ailleurs l'entrée du circuit d'amplification (62) du deuxième module et ainsi de suite.

17. Radar selon l'une quelconque des revendications 14 à 16, **caractérisé en ce que** son antenne d'émission (AE) est celle du module pilote, alimentée par l'oscillateur local du module pilote.

18. Radar selon l'une quelconque des revendications précédentes, **caractérisé en ce qu'**il comporte un arbre (73) autour duquel il tourne pour balayer l'espace intérieur d'une cuve contenant un matériau, les antennes (1, AE) étant situées en regard de ce matériau.

19. Radar selon l'une quelconque des revendications précédentes, **caractérisé en ce qu'**il comporte une fonction d'imagerie.

## Claims

1. Radar, comprising means for beam-formation by computation (7) associated with N homodyne reception channels, each channel supplying a reception signal to the means for beam-formation by computation, the transmission antenna (AE) being arranged so that its distance increases from one reception antenna (1) to the next, **characterized in that** the spacing between the antennas being defined so as to orient the homodyne leakage in a direction located in an angular zone of space that is not processed by the radar, the distance of the transmission antenna (AE) increases regularly from one reception antenna (1) to the next.

2. Radar according to Claim 1, **characterized in that** the reception channel antennas (1) are aligned with a substantially constant space between two consecutive antennas.

3. Radar according to either of the preceding claims, **characterized in that** the transmission antenna (AE) is aligned with the reception antennas (1).

4. Radar according to any one of the preceding claims, **characterized in that** it uses the homodyne leakage to perform a self-test of the transmission-reception function.

5. Radar according to any one of the preceding claims, **characterized in that** a reception channel comprises an antenna (1), a microwave mixer (2), an amplifier (3) and an analogue-digital converter (4), an antenna (1) is linked to a first input of the mixer (2), the second input of said mixer receiving the signal produced by a transmission local oscillator (5), the output of the mixer being linked to the input of the amplifier (3), the output of which is linked to the input of the converter (4), said converter converting the analogue reception signal into a digital signal designed to be processed by the means for beam-formation by computation.

6. Radar according to Claim 5, **characterized in that** the reception antennas (1) are of the patch type made on one and the same printed circuit (12).

7. Radar according to Claim 6, **characterized in that** the mixers (2) are made on this same printed circuit.

8. Radar according to either of Claims 5 or 6, **characterized in that** a metal band (44) surrounds the mixers, this band being cut at places where the microwave links pass towards the antennas, a metal cover covering the mixers with its edges in contact with the metal band.

9. Radar according to any one of the preceding claims, **characterized in that** the waveform is of the FMCW type, a continuous waveform whose frequency is modulated in ramps.

10. Radar according to any one of Claims 1 to 8, **characterized in that** its waveform is of the frequency-hopping type.

11. Radar according to any one of the preceding claims, **characterized in that** it comprises a local oscillator (5) powering the transmission antenna (AE) and the reception channels.

12. Radar according to Claim 12, **characterized in that** the microwave line length between the local oscillator (5) and a mixer (2) is the same for all the mixers.

13. Radar according to any one of Claims 5 to 12, **characterized in that** the printed circuit (12) being fixed to a face of a plate, the other face of this plate supports the radar processing means.

14. Modular radar, **characterized in that** a module (61) is a radar according to any one of the preceding claims, the circuits for beam-formation by computation operating in parallel.

15. Radar according to Claim 14, **characterized in that** a first module functions as a driver module, its local oscillator (5) controlling all the other modules, each module including an amplifier (62) at an input to amplify the signal from the local oscillator (5).

16. Radar according to either of Claims 14 or 15, **characterized in that** the output of the amplification circuit (62) for the local oscillator signal which feeds the reception circuits of the driver module, also drives the input of the amplification circuit (62) of the second module, and so on.

17. Radar according to any one of Claims 14 to 16, **characterized in that** its transmission antenna (AE) is that of the driver module, fed by the local oscillator of the driver module.

18. Radar according to any one of the preceding claims, **characterized in that** it comprises a shaft (73) around which it rotates to sweep the interior space of a container containing a material, the antennas (1, AE) being located facing this material.

19. Radar according to any one of the preceding claims, **characterized in that** it includes an imaging function.

## Patentansprüche

1. Radar, das Mittel zur Strahlformung durch Berechnung (7) aufweist, die N Kanälen mit homodynem Empfang zugeordnet sind, wobei jeder Kanal ein Empfangssignal an die Mittel zur Strahlformung durch Berechnung liefert, wobei die Sendeantenne (AE) so angeordnet ist, dass ihr Abstand sich von einer Empfangsantenne (1) zur nächsten vergrößert, **dadurch gekennzeichnet, dass**, da der Zwischenraum zwischen den Antennen so definiert ist, dass der homodyne Verlust in eine Richtung ausgerichtet wird, die sich in einer Winkelzone des Raums befindet, die nicht vom Radar verarbeitet wird, sich der Abstand der Sendeantenne (AE) regelmäßig von einer Empfangsantenne (1) zur nächsten erhöht.

2. Radar nach Anspruch 1, **dadurch gekennzeichnet, dass** die Antennen der Empfangskanäle (1) mit einem im Wesentlichen konstanten Zwischenraum d zwischen zwei aufeinander folgenden Antennen fluchtend ausgerichtet sind.

3. Radar nach einem der vorhergehenden Ansprüche, **dadurch gekennzeichnet, dass** die Sendeantenne (AE) mit den Empfangsantennen (1) fluchtend ausgerichtet ist.

4. Radar nach einem der vorhergehenden Ansprüche, **dadurch gekennzeichnet, dass** es den homodynen Verlust nutzt, um einen Selbsttest der Sende-Empfangs-Funktion durchzuführen.

5. Radar nach einem der vorhergehenden Ansprüche, **dadurch gekennzeichnet, dass** ein Empfangskanal eine Antenne (1), eine Mikrowellen-Mischstufe (2), einen Verstärker (3) und einen Analog-DigitalWandler (4) aufweist, dass eine Antenne (1) mit einem ersten Eingang der Mischstufe (2) verbunden ist, deren zweiter Eingang das von einem lokalen Sendeoszillator (5) erzeugte Signal empfängt, wobei der Ausgang der Mischstufe mit dem Eingang des Verstärkers (3) verbunden ist, dessen Ausgang mit dem Eingang des Wandlers (4) verbunden ist, wobei letzterer das analoge Empfangssignal in ein digitales Signal umwandelt, das dazu bestimmt ist, von den Mitteln zur Strahlformung durch Berechnung verarbeitet zu werden.

6. Radar nach Anspruch 5, **dadurch gekennzeichnet, dass** die Empfangsantennen (1) vom Typ Pastille sind, die auf einer gemeinsamen gedruckten Schaltung (12) hergestellt sind.

7. Radar nach Anspruch 6, **dadurch gekennzeichnet, dass** die Mischstufen (2) sich in dieser gemeinsamen gedruckten Schaltung befinden.

8. Radar nach einem der Ansprüche 5 oder 6, **dadurch gekennzeichnet, dass** ein Metallband (44) die Mischstufen umgibt, wobei dieses Band an den Stellen geschnitten ist, wo die Mikrowellenverbindungen zu den Antennen verlaufen, wobei die Ränder einer Metallhaube, die die Mischstufen bedeckt, mit dem Metallband in Kontakt stehen.

9. Radar nach einem der vorhergehenden Ansprüche, **dadurch gekennzeichnet, dass** seine Wellenform vom Typ FMCW ist, eine durchgehende Wellenform, deren Frequenz von Rampen moduliert wird.

10. Radar nach einem der Ansprüche 1 bis 8, **dadurch gekennzeichnet, dass** seine Wellenform vom Typ mit Frequenzsprung ist.

11. Radar nach einem der vorhergehenden Ansprüche, **dadurch gekennzeichnet, dass** es einen lokalen Oszillator (5) aufweist, der die Sendeantenne (AE) und die Empfangskanäle speist.

12. Radar nach Anspruch 11, **dadurch gekennzeichnet, dass** die Länge der Mikrowellenleitung zwischen dem lokalen Oszillator (5) und einer Mischstufe (2) für alle Mischstufen die gleiche ist.

13. Radar nach einem der Ansprüche 5 bis 12, **dadurch gekennzeichnet, dass**, da die gedruckte Schaltung (12) auf einer Seite einer Platine befestigt ist, die andere Seite dieser Platine die Radarverarbeitungsmittel trägt.

14. Modulares Radar, **dadurch gekennzeichnet, dass** ein Modul (61) ein Radar nach einem der vorhergehenden Ansprüche ist, wobei die Schaltungen zur Strahlformung durch Berechnung parallel arbeiten.

15. Radar nach Anspruch 14, **dadurch gekennzeichnet, dass** ein erstes Modul die Aufgabe eines Treibermoduls hat, wobei sein lokaler Oszillator (5) alle anderen Module steuert, wobei jedes Modul am Eingang einen Verstärker (62) aufweist, um das Signal des lokalen Oszillators (5) zu verstärken.

16. Radar nach einem der Ansprüche 14 oder 15, **dadurch gekennzeichnet, dass** der Ausgang der Verstärkungsschaltung (62) des lokalen Oszillatorsignals, der die Empfangsschaltungen des Treibermoduls speist, außerdem den Eingang der Verstärkungsschaltung (62) des zweiten Moduls steuert, und so weiter.

17. Radar nach einem der Ansprüche 14 bis 16, **dadurch gekennzeichnet, dass** seine Sendeantenne (AE) diejenige des Treibermoduls ist, die vom lokalen Oszillator des Treibermoduls gespeist wird.

18. Radar nach einem der vorhergehenden Ansprüche, **dadurch gekennzeichnet, dass** es eine Welle (73) aufweist, um die es dreht, um den Innenraum eines ein Material enthaltenden Behälters abzutasten, wobei die Antennen (1, AE) diesem Material gegenüber angeordnet sind.

19. Radar nach einem der vorhergehenden Ansprüche, **dadurch gekennzeichnet, dass** es eine Bilderzeugungsfunktion aufweist.
